(19) Europäisches Patentamt
European Patent Office
Office européen des brevets

(11) Publication number: **0 169 682 B1**

(12) # EUROPEAN PATENT SPECIFICATION

(45) Date of publication of patent specification: **05.06.91**

(51) Int. Cl.5 **F04D 13/06**, F04D 25/06, F01D 15/10

(21) Application number: **85304858.5**

(22) Date of filing: **08.07.85**

(54) **Fluid machine.**

(30) Priority: **13.07.84 GB 8417929**
**13.11.84 GB 8428693**

(43) Date of publication of application:
**29.01.86 Bulletin 86/05**

(45) Publication of the grant of the patent:
**05.06.91 Bulletin 91/23**

(84) Designated Contracting States:
**AT BE CH DE FR GB IT LI LU NL SE**

(56) References cited:
**FR-A- 634 765**
**GB-A- 448 026**
**US-A- 1 534 451**
**GB-A- 345 574**
**GB-A- 1 439 806**
**US-A- 2 747 512**

(73) Proprietor: **Sneddon, John Leishman**
**18 Eilean Rise**
**Ellon Aberdeenshire AB4 9NF Scotland(GB)**

(72) Inventor: **Sneddon, John Leishman**
**18 Eilean Rise**
**Ellon Aberdeenshire AB4 9NF Scotland(GB)**

(74) Representative: **Murgitroyd, Ian G. et al**
**Ian G. Murgitroyd and Company Mitchell**
**House 333 Bath Street**
**Glasgow G2 4ER(GB)**

**EP 0 169 682 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a fluid machine.

Fluid machines such as pumps are used to increase the dynamic state of a fluid. In the case of rotary pumps this is accomplished by imparting motion to the fluid with a rotor. The rotor is normally mounted on a solid shaft which is connected directly, or through a system of gears, to a prime mover such as, for example, an electric motor.

Fluid machines such as generators work in the inverse fashion whereby a fluid acts upon and imparts motion to a rotor. The rotor is normally mounted on a solid shaft which is connected to, for example, an electrical generator.

When a pump or generator is being installed considerable time must be spent to ensure that the shafts which connect the rotor to the drive means or the generating means are properly aligned and balanced. Incorrectly balanced shafts can result in unwanted vibration and premature failure.

US-A-1,534,451 illustrates a fluid machine which has a fluid reaction member mounted in an axial throughbore as can be seen in Figs. 1 and 2. This construction while providing a compact construction which overcomes the above problems is nevertheless a fairly complex piece of machinery which does not lend itself to being used with a selected type of pumping element as is the case with the prior art when the pump and the drive means are separate entities. GB-A-345,574 describes a mercury circulation pump which again has the fluid flowing through the motor. This is however a specialised construction and once again does not allow for a selected pump or fluid reaction member to be used. GB-A-1,439,806 illustrates a propulsion device having a propeller mounted in a fluid passage and circumferentially driven. This device is again however restricted to a single reaction member and cannot be adapted for multi-purpose use by substitution of the fluid reaction member.

An object of the present invention is to obviate or mitigate the above disadvantages.

According to the present invention there is provided an axial flow fluid machine comprising an outer casing, a rotor assembly rotatably mounted within said outer casing, drive means between said outer casing and said rotor assembly to rotate said rotor assembly within said outer casing, said rotor assembly comprising a hollow shaft formed by two half shafts, said half shafts rotatably supporting the rotor assembly within the outer casing, and a hollow cylinder carried within the hollow shaft and keyed to it for rotation therewith by disengagably axially slidable means, said hollow cylinder having a selected fluid reaction member fixedly mounted within it to rotate therewith and to react with fluid flowing axially through said machine, characterized in that said rotor assembly can be assembled with a selected one of a plurality of interchangeable hollow cylinders mounting a selected fluid reaction member.

When the machine is to operate as a fluid pump, the rotor assembly is provided with drive means for rotating the rotor assembly within the casing.

The drive means may be electrical, hydraulic or pneumatic, or may include a turbine or an internal combustion engine.

In an electrically driven machine the stator of an electric motor is mounted on the casing and the rotor assembly is provided with a squirrel cage rotor.

The fluid reaction member may be in the form of volutes, a helical screw or a propeller or may be in the form of a centrifugal pump impeller. Several pump stages may be provided if it is is desired to provide high pressure fluid.

When the machine is to operate as a motor or generator, fluid flowing through the hollow shaft of the rotor assembly acts upon the fluid reaction member to impart rotary motion to the shaft. In one embodiment, the rotor assembly is provided with a squirrel cage and the casing is provided with the stator winding of an electric generator.

The machine may operate as drive means for a water or air craft in which case the fluid reaction member acts on the fluid in which the craft is operating. By imparting motion to the fluid, a force is generated on the machine causing a driving force to be applied to the craft.

Embodiments of the present invention will now be described, by way of example, with reference to the accompanying drawings, in which:-

Fig. 1 is a sectional side view of one embodiment of a fluid machine according to the present invention;

Fig. 2 is a side view of the fluid reaction member of the machine of Fig. 1;

Fig. 3 is an end view of the fluid reaction member of Fig. 2;

Fig. 4 is a sectional plan view of the fluid reaction member of Fig. 3 taken along the line A-A;

Fig. 5 is a part sectional side view of a second embodiment of a fluid machine according to the present invention;

Fig. 6 is a sectional side view of the rotor assembly of the fluid machine of Fig. 5 showing the parts in spaced relationship;

Fig. 7 is a side view of a Archimedean type fluid reaction member for use in the rotor assembly of Fig. 6;

Fig. 8 is an end view of the fluid reaction member of Fig. 7;

Fig. 9 is a side view of a half shaft of the rotor assembly of Fig. 6;

Fig. 10 is an end view of the half shaft of Fig. 9;

Figs. 11 to 14 are part sectional views of alternative fluid reaction members for use in the rotor assembly of Fig. 6;

Fig. 15 is a part sectional side view of a third embodiment of a fluid machine according to the present invention;

Fig. 16 is a part sectional end view of a fourth embodiment of a fluid machine according to the present invention;

Fig. 17 is a part sectional side view of the fluid machine of Fig. 16;

Fig. 18 is a sectional end view of a Pelton wheel driven fluid machine according to the present invention; and

Fig. 19 is a sectional side view of a gas turbine driven rotor assembly of a fluid machine according to the present invention.

Referring to Figs. 1 to 4 of the drawings, a fluid machine comprises a casing 1 and a rotor assembly 2 provided with a fluid reaction member in the form of a voluted cylindrioal pump rotor 3.

The casing 1 has a central portion 4 and is provided with two flanges 11 and 12 to enable the machine to be connected to up and down stream pipework respectively.

A through bore 13 is provided in the casing 1, the bore 13 having end portions 14 and 15 and a wider central portion 16 for accommodating the rotor assembly 2.

The central portion 4 of the casing 1 acts as the stator of an alternating current induction motor and is provided with a number of coils 5 which produce a rotating magnetic field.

The rotor assembly 2 has a central portion 26 located within the central portion of the bore 13 of the casing 1 and has end portions 20 and 21 supported by respective sets of bearings 22 mounted in the casing 1. A through bore 23 is provided in the rotor assembly 2, the end portions 20 and 21 which are of similar diameter to the end portions 14 and 15 of the bore 13.

Seals and thrust units 24 are provided at the end portions 20 and 21 between the casing 1 and the rotor assembly 2 to prevent fluid gaining access to the central portion 16 of bore 13 and to prevent lateral movement of the assembly 2.

The bore 23 has a wider central portion 25 to accommodate the cylindrical pump rotor 3.

The central portion 26 of the rotor assembly 2 acts as the rotor of the a.c. induction motor and rotates at the same speed as a rotating magnetic field produced by the coils 5. An annular air gap 27 is provided between the rotor assembly 2 and inner surface of the central portion 4 of the body 1.

The pump rotor 3 is provided with two volutes 30 and 31 which pass through the body of the rotor 3. The edges of the volutes 30 and 31 are provided with ports 32 arranged normal to the axis of rotation of the rotor such as to induce fluid to flow through the volutes 30 and 31 as the rotor 3 rotates.

Additional booster blades 33 are provided in the end portions 20 and 21 of the bore 23 to assist propulsion of the fluid through the machine and to provide homogeneity in instances where the fluid exists in more than one phase or where mass flow metering is required.

In use, the machine operates as an electrically operated pump, fluid being propelled through the rotor assembly 2 by the rotating pump rotor 3 and the booster blades 33. As the direction of rotation of the rotor assembly 2 may be reversed the machine can be used to propel fluid in either direction.

The fluid passing through the machine acts as coolant for the electric motor and so minimises the need for additional cooling apparatus.

Referring now to Figs. 5 to 10, a fluid machine comprises a casing 100 and a rotor assembly 120 having a fluid reaction member 130.

The casing 100 is hollow and is formed of two halves 101 and 102 which are held together by nuts and studs 103. Two end flanges 104 and 105 are provided on the casing 100 to connect the machine to up and down stream pipework (not shown). The casing 100 has a central portion 106 in which there is mounted the stator 107 of an alternating current squirrel cage induction motor. The stator 107 is provided with stator coils 108 and is secured to the casing 100 by bolts 109.

The fluid reaction member 130 is provided with a four blade Archimedean screw shaped impeller 131 fixedly mounted in a hollow cylinder 132. The cylinder 132 is provided with four longitudinally extending slots 133 on its outer surface shaped to accept keying members 115 which project from the flanges 116 and 117 provided on two hollow half shafts 121 and 122. The half shafts 121 and 122 are located over respective ends of the cylinder 132. Seals 134 are provided between the cylinder 132 and the inner faces of the flanges 116 and 117 of the shafts 121 and 122. Seals 123 are also provided between the ends of each of the keying members 115 on the half shafts 121 and 122. A squirrel cage 124 of the electric motor is located on the outer surface of the rotor assembly 120 and is secured in place by bolts 125 which pass through the flanges 116 and 117 on the half shafts 121 and 122 into the ends of the squirrel cage 124. Seals 126 are provided between the end portions of the cage 124 and the flanges 116 and 117.

The rotor assembly 120 is mounted on bearings 127 within the central portion 106 of the casing 100. Seals 128 are provided at the end portions of the half shafts 121 and 122 to prevent the working fluid from gaining access to the bearings 127 and the innards of the electric motor.

At the up and down stream openings 110 and 111 of the casing 100 straightening vanes 112 are provided to reduce the rotary motion imparted on the fluid by the impeller 131. On energisation of the coils 108 of the stator 107 the rotor assembly 120 is caused to rotate. The machine then pumps fluid in either direction and may be operated at an appropriate speed as desired.

The rotor assembly as shown in Fig. 6 may be provided with a fluid reaction member to suit the application of the machine and examples of alternative fluid reaction members are shown in Figs. 11 to 14.

Fig. 11 shows a fluid reaction member 530 having a two-blade Archimedean screw type impeller 531 rigidly mounted in a hollow shaft 532. The outer face of the shaft is provided with longitudinal slots 533 to engage the keying members 115 when the fluid reaction member 530 is located in the rotor assembly 120.

Fig. 12 shows a fluid reaction member 630 which has a propeller type impeller 631 fixedly mounted within a hollow shaft 632. The outer surface of the shaft 632 is provided with longitudinal slots 633 for engaging with the keying members 115.

Fig. 13 shows a fluid reaction member 730 which has a cone shaped helical bladed impeller 731 which is fixedly mounted in shaft 732 having a conical through bore 734. The outer face of the shaft 732 is provided with longitudinal slots 733 for engaging with the keying members 115.

Fig 14 shows a fluid reaction member 830 made up from a number of shaft portions 851-857 these being an inlet shaft portion 851, an outlet shaft portion 857 and five intermediate shaft portions 852-856. Between each shaft portion 851-857 there is provided a centrifugal pump stage 831, each stage 831 having an impeller 837 and a diffuser 843. Each stage 831 is screwed into a shaft portion 851-857. Adjacent shaft portions 851-857 are screwed into one another, seals 855 being provided between each section. Longitudinal slots 833 are provided on the outer faces of the shaft members 851-857 for engaging with the keying members 115.

Referring now to Fig. 15, a fluid machine comprises a casing 900 containing a rotor assembly 920 in which there is mounted a fluid reaction member in the form of a pump assembly 930.

The casing 900 is hollow and is in the form of a split casing made up from two halves 901 and 902 which are held together by nuts and studs 903.

The casing 900 is provided with a central portion 910 and end flanges 904 and 905 for connection by studs and nuts 909 to an upstream stool piece 906 and a downstream stool piece 907. The central portion 910 of the casing 900 accommodates the stator 908 of an electric motor.

The rotor assembly 920 is formed of two stepped half shafts 921 and 922 which are supported at their end portions by bearings 923. Seals 924 are fitted between the casing 900 and the half shafts to prevent the pumped fluid gaining access to the bearings.

The rotor assembly 920 has a central portion 927 provided with a squirrel cage 925 and spaced from the stator 908 on the casing 900 by an air gap 926.

The pump assembly 930 is a of the centrifugal type and comprises four impellers 931 to 934 fixedly mounted in the rotor assembly 920 and four diffusers 935 to 938 fixedly mounted to a shaft 941 which passes through the centre of the rotor assembly 920. Seals 942 to 945 are provided between the shaft 941 and each impeller 931 to 934 to mitigate pressure losses through the pump assembly 930.

Referring to Figs. 16 and 17, a fluid machine comprises a cylindrical casing 200 and a rotor assembly 220 rotatably mounted within the casing 200 on bearings 221.

The casing 200 has an enlarged inner central portion 210 which is provided with an electrical stator 201 having coils 202.

The rotor assembly 220 comprises a fluid reaction member in the form of a propeller 230 which is mounted in a hollow cylinder 225. The rotor assembly 220 is provided with a squirrel cage 222 on its outer surface, an air gap 223 being provided between the cage 222 and the stator 201.

Seals 224 between the casing and the rotor assembly 220 protect the bearings 221 and the electrical parts from the ingress of the working fluid.

The fluid machine may be used as a ventilating fan or may be mounted on a water craft. In the latter case the machine is positioned below the water line and the rotating propeller 230 drives the craft in place of a conventional shaft driven propeller.

The apparatus may be placed in a pipeline carrying water travelling at a high speed. The propellor 230 is then rotated by the water passing through the rotor assembly 220 and the rotation of the propeller 230 causes the rotor assembly 220 to rotate. This rotation would induce electric currents in the coils 202 of the stator 201 and the apparatus acts as an hydro-electric generator.

Referring to Fig. 18, a pelton wheel driven pump comprises a casing 300 having an inlet port 301 and outlet port 302. A pelton wheel 310 is mounted on the outer surface of a hollow shaft 320 on the inside of which there is provided a fluid reaction member in the form of a propeller 330.

A propulsion fluid travelling at a high velocity enters the casing 300 through the inlet port 301 which is provided with a flange 303 for connection to upstream pipework (not shown). The fluid may be steam, air, oil or gas.

The fluid acts upon the blades 311 of the pelton wheel 310, causing the wheel to rotate and then passes out of the casing through the outlet port 302. The outlet port 302 is provided with a flange 304 for connection to downstream pipework (not shown).

The rotation of the pelton wheel 310 causes the shaft 320 and the propeller 330 to rotate causing fluid to be pumped through the shaft 320.

Referring to Fig. 19, a gas turbine driven rotor assembly 410 comprises a fluid reaction member in the form of a screw type impeller 430 mounted within a hollow shaft 420.

Axial compressor blades 411, first stage turbine blades 412 and second stage turbine blades 413 are mounted on the outer surface of the shaft 420.

In a further embodiment of the present invention the drive means for rotating the rotor assembly may be either a normal reciprocating combustion engine provided with a hollow crank or, more suitably, a Wankel type combustion engine which operates in a rotary manner.

## Claims

1. An axial flow fluid machine comprising an outer casing (100), a rotor assembly (120) rotatably mounted within said outer casing (100), drive means between said outer casing (100) and said rotor assembly (120) to rotate said rotor assembly (120) within said outer casing (100), said rotor assembly (120) comprising a hollow shaft formed by two half shafts (121), (122) said half shafts (121), (122) rotatably supporting the rotor assembly (120) within the outer casing (100), and a hollow cylinder (132) carried within the hollow shaft and keyed to it for rotation therewith by disengagably axially slidable means (115), said hollow cylinder (132) having a selected fluid reaction member (130) fixedly mounted within it to rotate therewith and to react with fluid flowing axially through said machine, characterized in that said rotor assembly (120) can be assembled with a selected one of a plurality of interchangeable hollow cylinders (132) mounting a selected fluid reaction member (130).

2. An axial flow fluid machine as claimed in Claim 1, wherein operation of said drive means causes rotation of said rotor assembly (120) and axial flow fluid pumping action of the machine.

3. An axial flow fluid machine as claimed in Claim 1 wherein axial flow of fluid through said machine causes rotation of said rotor assembly (120) and operation of said drive means as a generator.

4. An axial flow fluid machine as claimed in Claim 2 or 3, wherein said drive means is a squirrel cage electric motor having a stator (107) mounted in said outer casing and a squirrel cage rotor (124) forming part of said rotor assembly (120).

5. An axial flow fluid machine as claimed in Claim 2, 3 or 4 wherein said drive means is a Wankel type rotary internal combustion engine including a rotary piston engaged with said rotor assembly to rotate the rotor assembly within said outer casing.

6. An axial flow fluid machine as claimed in any one of the preceding Claims wherein said fluid reaction member comprises an array of volutes formed within said hollow cylinder.

7. An axial flow fluid machine as claimed in any one of the preceding Claims wherein said fluid reaction member comprises a propeller (230).

8. An axial flow fluid machine as claimed in any one of the preceding Claims wherein said fluid reaction member is an impeller of Archimendean screw form (131).

9. An axial flow fluid machine as claimed in any one of the preceding Claims wherein said fluid reaction member is an impeller of centrifugal pump form.

## Revendications

1. Machine à fluide d'écoulement axial, comprenant une enveloppe exterieure (100), un ensemble tournant (120) monté rotatif dans cette enveloppe extérieure (100), un moyen d'entraînement relatif entre cette enveloppe extérieure (100) et cet ensemble tournant (120) pour faire tourner cet ensemble tournant (120) à l'intérieur de cette enveloppe extérieure (100), ledit ensemble tournant (120) comprenant un arbre creux constitué par deux demi-arbres (121), (122), ces demi-arbres (121), (122) supportant de manière rotative l'ensemble tournant (120) à l'intérieur de l'enveloppe extérieure (100), et un cylindre creux (132) étant placé à l'intérieur de l'arbre creux et étant lié à celui-ci pour qu'il tourne avec lui grâce à des moyens de liaison (115) désengageables par coulissement axial, ledit cylindre creux (132) étant équipé d'un organe à réaction de fluide (130) sélectionné qui est monté de manière fixe dans celui-ci de façon à tourner avec lui et à réagir avec le fluide qui s'écoule axialement à travers ladite machine, caractérisée en ce que ledit ensemble tournant (120) peut être monté avec un cylindre creux (132) qui est sélectionné parmi une pluralité de cylindres creux interchangeables et comportant chacun un organe à réaction de fluide (130) sélectionné.

**2.** Machine à fluide d'écoulement axial selon la revendication 1, dans laquelle l'activation dudit moyen d'entrainement entraîne la rotation dudit ensemble tournant (120) et une action de pompage par la machine d'un flux axial de fluide.

**3.** Machine à fluide d'écoulement axial selon la revendication 1, dans laquelle l'écoulement axial de fluide à travers ladite machine cause la rotation ledit ensemble tournant (120) et le fonctionnement dudit moyen d'entrainement en générateur.

**4.** Machine à fluide d'écoulement axial selon la revendication 2 ou la revendication 3, dans laquelle ledit moyen d'entrainement est un moteur électrique à cage d'écureuil ayant un stator (107) monté dans ladite enveloppe extérieure et un rotor en cage d'écureuil (124) faisant partie dudit ensemble tournant (120).

**5.** Machine à fluide d'écoulement axial selon l'une des revendications 2, 3, ou 4, dans laquelle ledit moyen d'entrainement est une machine tournante à combustion interne de type Wankel incluant un piston rotatif en prise avec ledit ensemble tournant pour faire tourner l'ensemble tournant à l'intérieur de ladite enveloppe extérieure.

**6.** Machine à fluide d'écoulement axial selon l'une quelconque des revendications précédentes, dans laquelle ledit organe à réaction de fluide comprend une série de volutes formées dans ledit cylindre creux.

**7.** Machine à fluide d'écoulement axial selon l'une quelconque des revendications précédentes, dans laquelle ledit organe à réaction de fluide comprend un propulseur (230).

**8.** Machine à fluide d'écoulement axial selon l'une quelconque des revendications précédentes, dans laquelle ledit organe à réaction de fluide est un organe d'impulsion en forme de vis d'Archimède (131).

**9.** Machine à fluide d'écoulement axial selon l'une quelconque des revendications précédentes, dans laquelle ledit organe à réaction de fluide est un organe d'impulsion en forme de pompe centrifuge.

## Ansprüche

**1.** Fluidmaschine mit axialer Durchströmung, bestehend aus einem äußeren Gehäuse (100), einer in dem äußeren Gehäuse (100) drehbar gelagerten Rotoranordnung (120), einer Antriebseinrichtung zwischen dem äußeren Gehäuse (100) und der Rotoranordnung (120), um die Rotoranordnung (120) innerhalb des äußeren Gehäuses (100) zu drehen, wobei die Rotoranordnung (120) eine mit zwei Halbwellen (121,122) ausgebildete Hohlwelle aufweist und die Halbwellen (121,122) die Rotoranordnung (120) in dem äußeren Gehäuse (100) abstützen, und einem innerhalb der Hohlwelle angeordneten Hohlzylinder (132), der für eine mit der Hohlwelle gemeinsame Drehung durch außer Wirkung bringbare axiale Gleitmittel (115) verkeilt ist, wobei der Hohlzylinder (132) einen ausgewählten Fluidreaktionskörper (130) aufweist, der innerhalb für eine gemeinsame Drehung fest montiert ist und mit dem Fluid reagiert, das axial durch die Maschine strömt, dadurch **gekennzeichnet**, daß die Rotoranordnung (120) mit einem aus einer Vielzahl von austauschbaren Hohlzylindern (132) mit jeweils einem ausgewählten Fluidreaktionskörper (130) ausgewählten Hohlzylinder zusammengebaut werden kann.

**2.** Fluidmaschine mit axialer Durchströmung nach Anspruch 1, dadurch **gekennzeichnet**, daß die Betriebsweise der Antriebseinrichtung eine Drehung der Rotoranordnung (120) und eine Pumpwirkung der Maschine für eine Axialströmung des Fluids bewirkt.

**3.** Fluidmaschine mit axialer Durchströmung nach Anspruch 1, dadurch **gekennzeichnet**, daß eine Axialströmung des Fluids durch die Maschine eine Drehung der Rotoranordnung (120) und eine Betriebsweise der Antriebseinrichtung als ein Generator bewirkt.

**4.** Fluidmaschine mit axialer Durchströmung nach Anspruch 2 oder 3, dadurch **gekennzeichnet**, daß die Antriebseinrichtung ein elektrischer Kurzschlußmotor ist, der einen in dem äußeren Gehäuse montierten Stator (107) und einen Käfigläufer (124) aufweist, welcher ein Bauteil der Rotoranordnung (120) bildet.

**5.** Fluidmaschine mit axialer Durchströmung nach Anspruch 2, 3 oder 4, dadurch **gekennzeichnet**, daß die Antriebseinrichtung ein Wankel-Rotationskolbenmotor ist, bei welchem ein Rotationskolben mit der Rotoranordnung in Wirkverbindung ist, um die Rotoranordnung innerhalb des äußeren Gehäuses zu drehen.

**6.** Fluidmaschine mit axialer Durchströmung nach einem der vorhergehenden Ansprüche, dadurch **gekennzeichnet**, daß der Fluidreaktionskörper eine innerhalb des Hohlzylinders ausgebildete Gruppe von Spiralen aufweist.

**7.** Fluidmaschine mit axialer Durchströmung nach einem der vorhergehenden Ansprüche, dadurch **gekennzeichnet**, daß der Fluidreaktionskörper einen Propeller (230) aufweist.

**8.** Fluidmaschine mit axialer Durchströmung nach einem der vorhergehenden Ansprüche, dadurch **gekennzeichnet**, daß der Fluidreaktionskörper ein Laufrad (131) mit einer archimedischen Spiralform ist.

**9.** Fluidmaschine mit axialer Durchströmung nach einem der vorhergehenden Ansprüche, dadurch **gekennzeichnet**, daß der Fluidreaktionskörper ein Laufrad mit zentrifugaler Pumpenform ist.

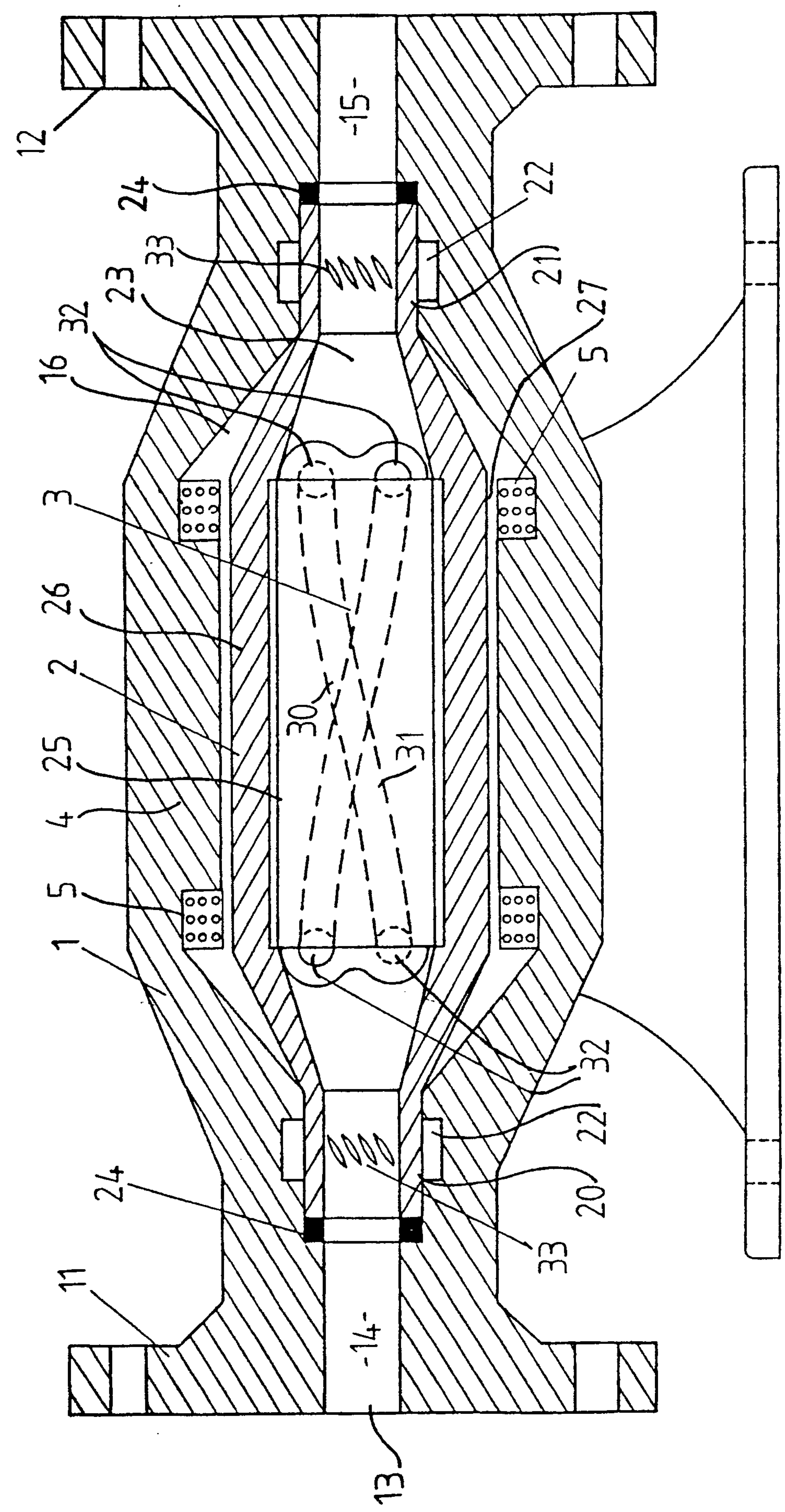


Fig.1.

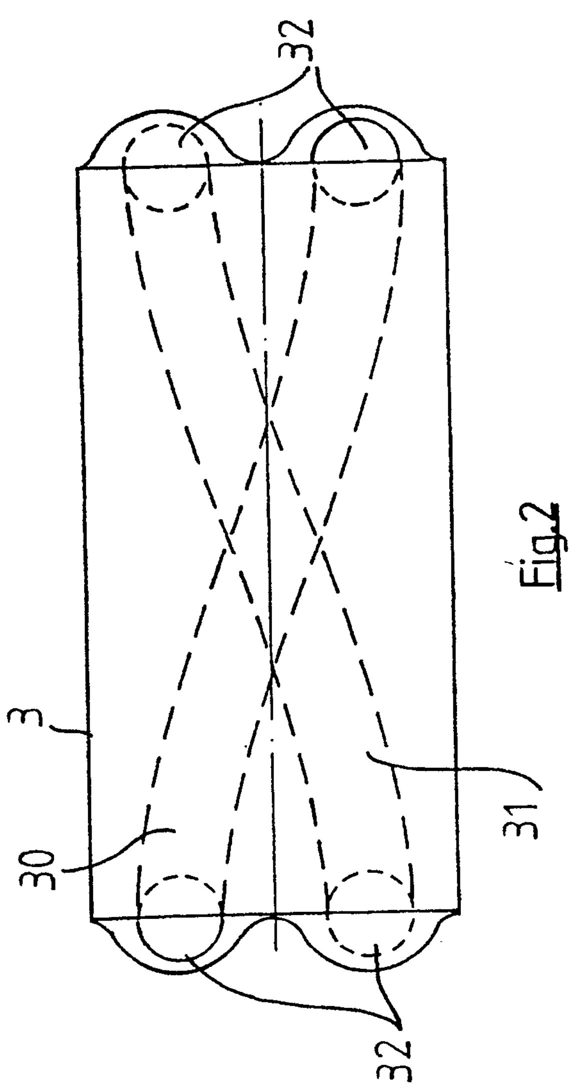


Fig.2

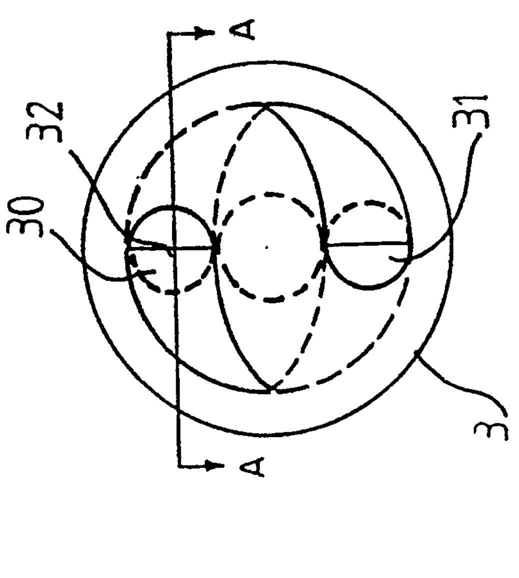


Fig.3

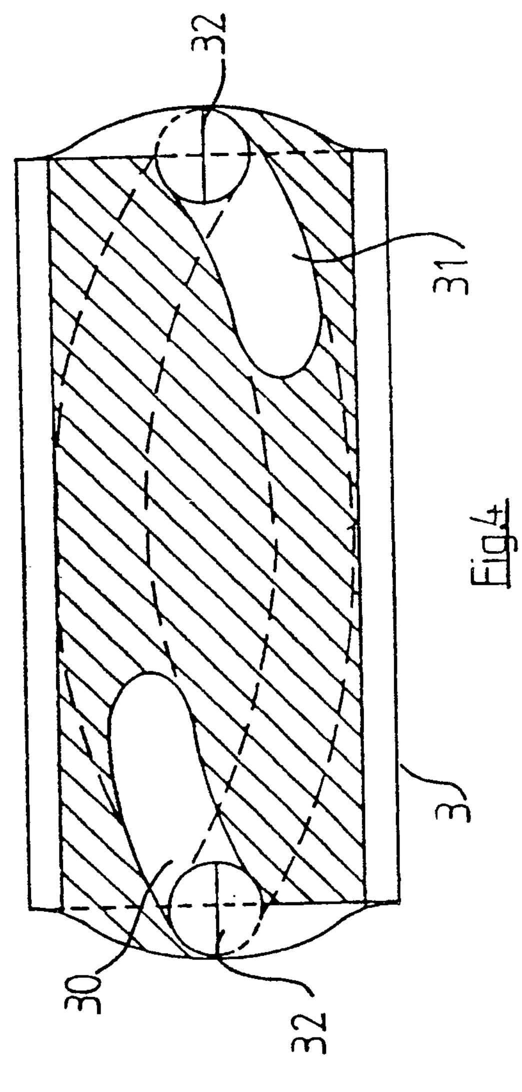


Fig.4

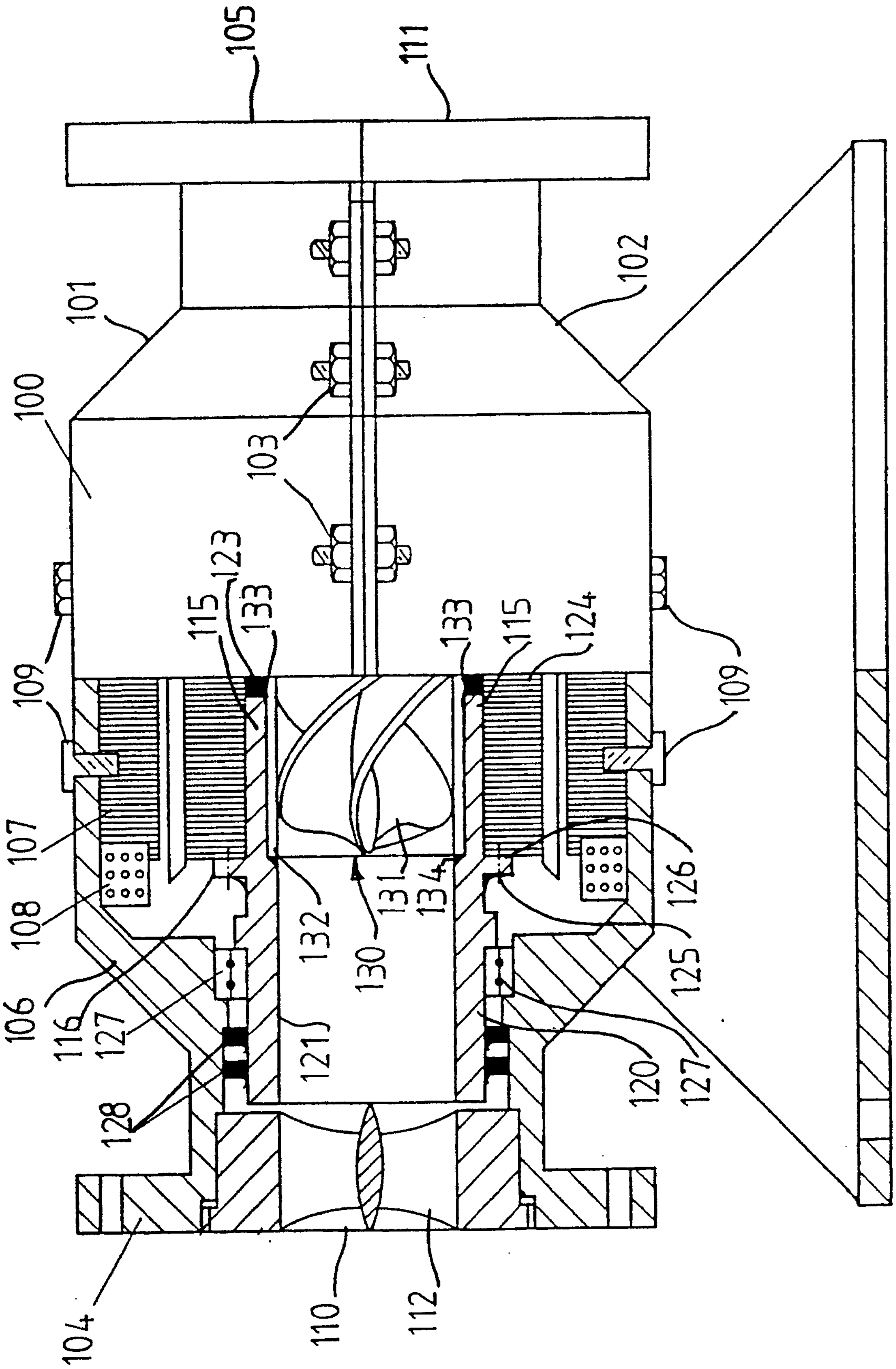
105
111
101
102
100
103
109
123
133
115
124
107
108
106
116
127
128
132
130
131
134
126
125
121
120
104
110
112

Fig.5

Fig.6

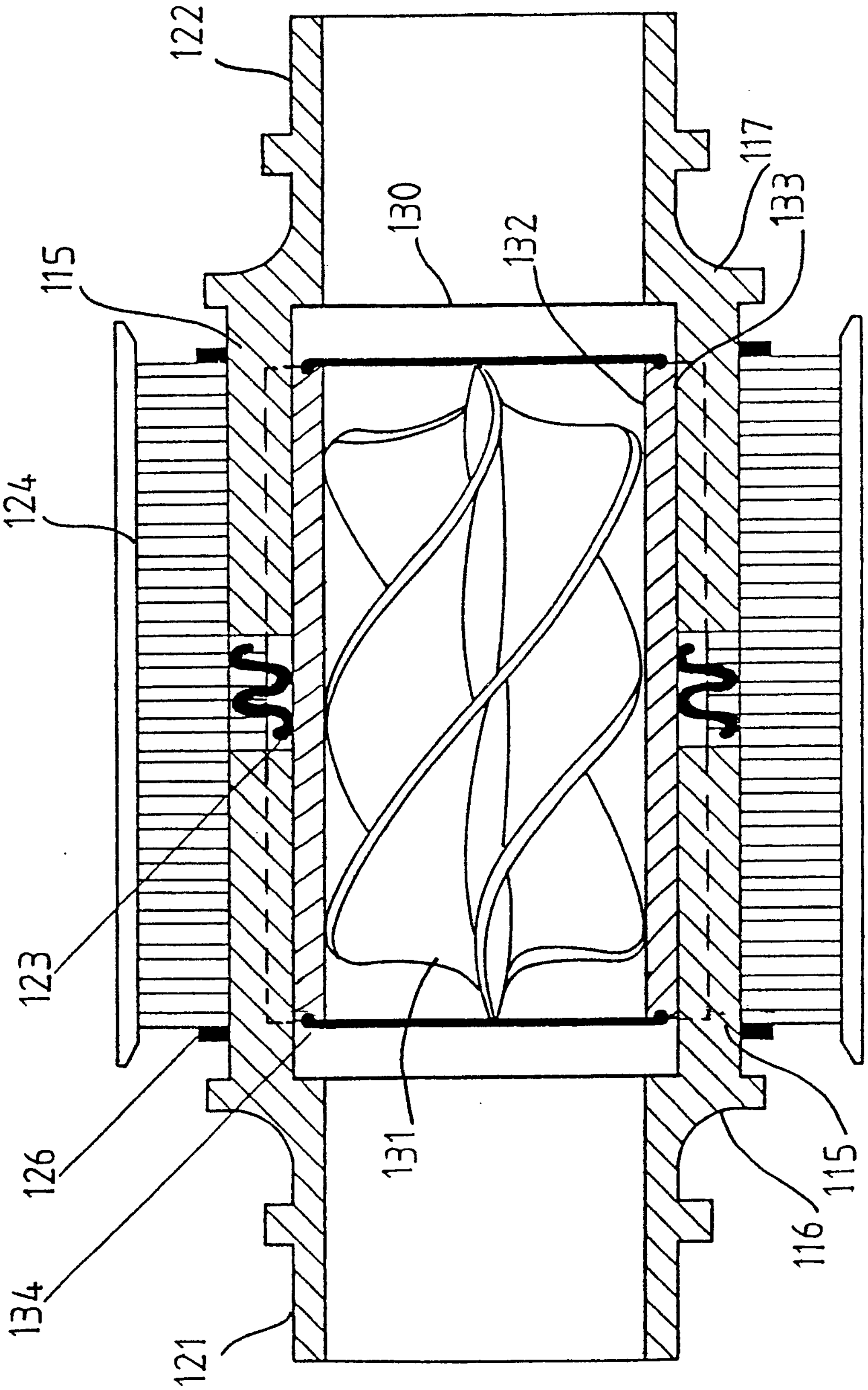

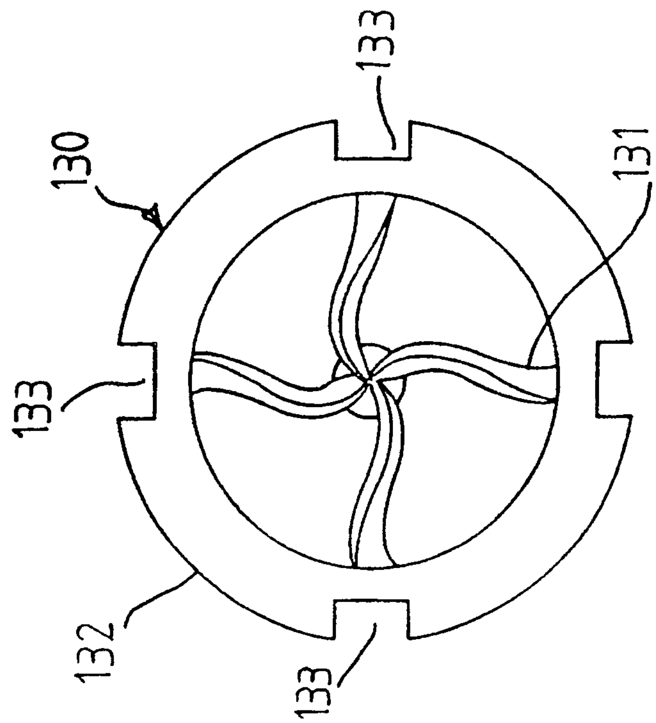


Fig.8

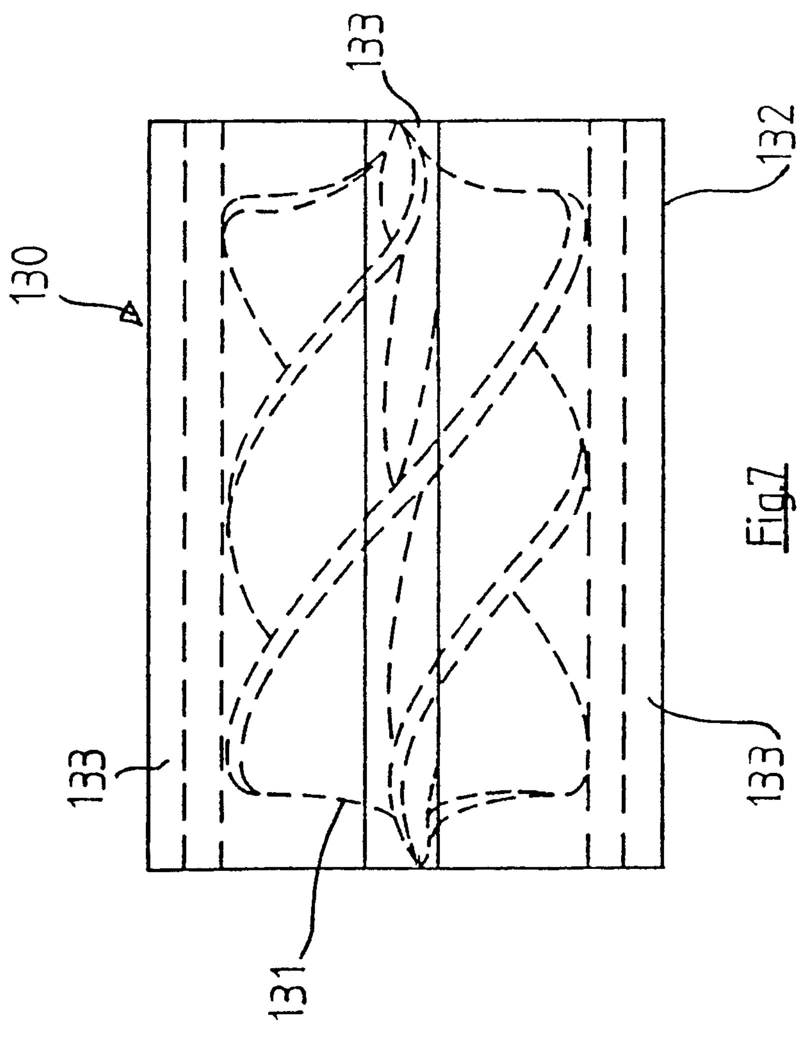


Fig.7

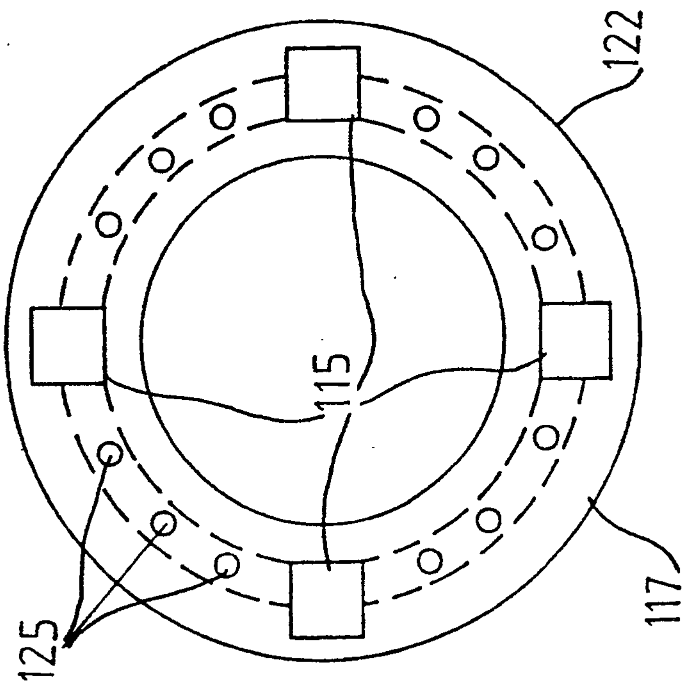


Fig.10

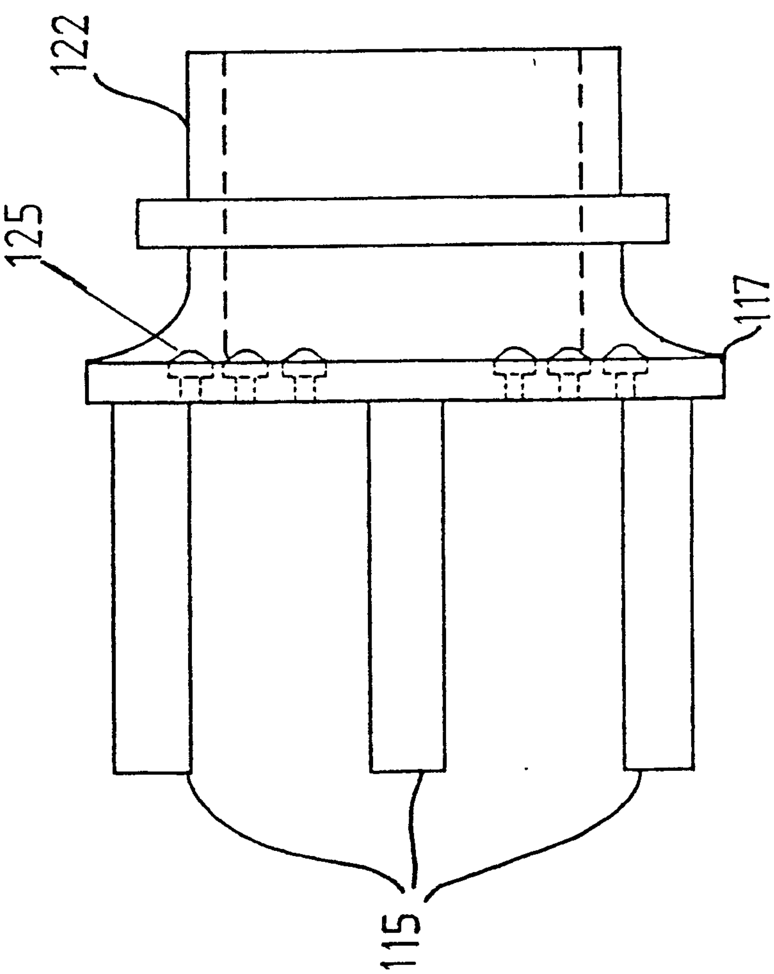


Fig.9

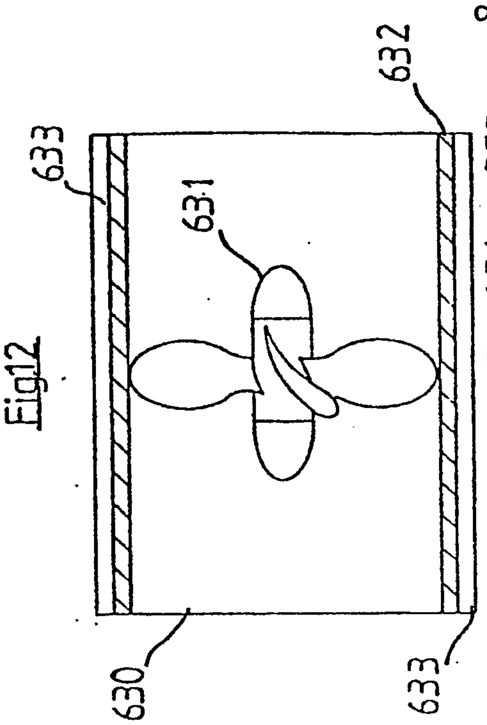


Fig.12

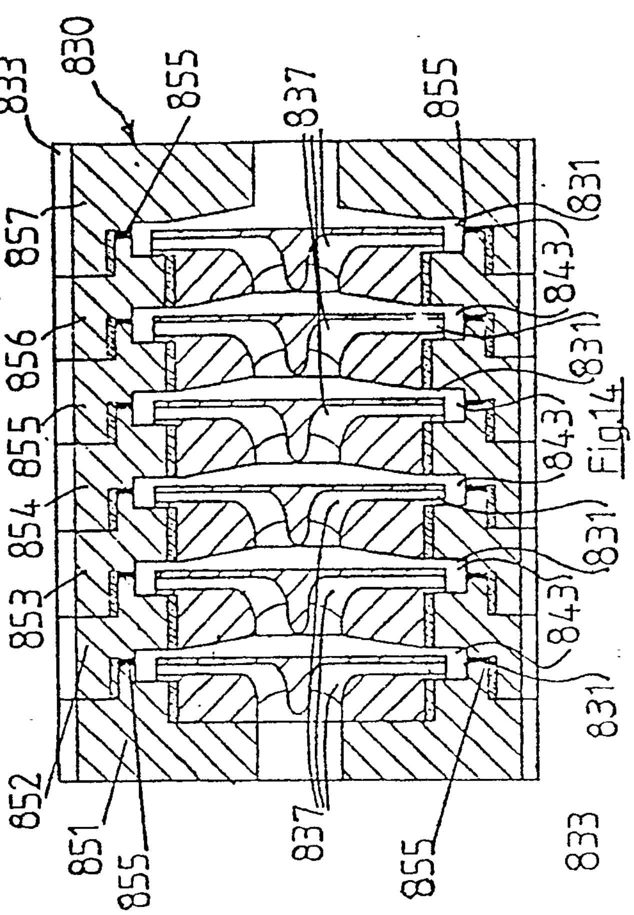


Fig.14

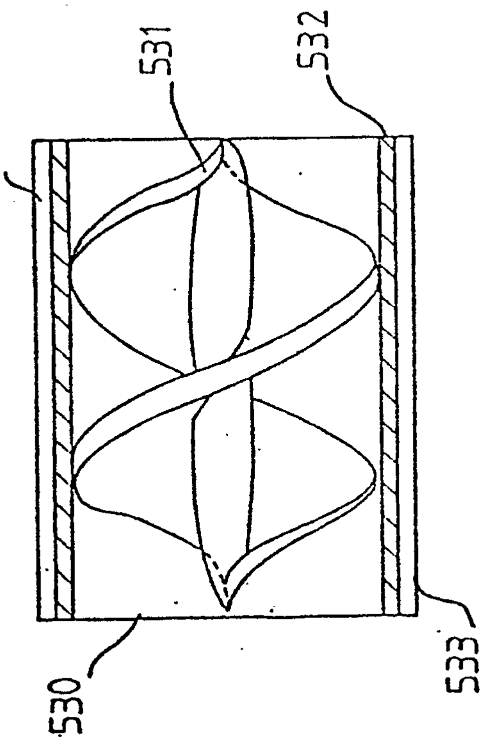


Fig.11

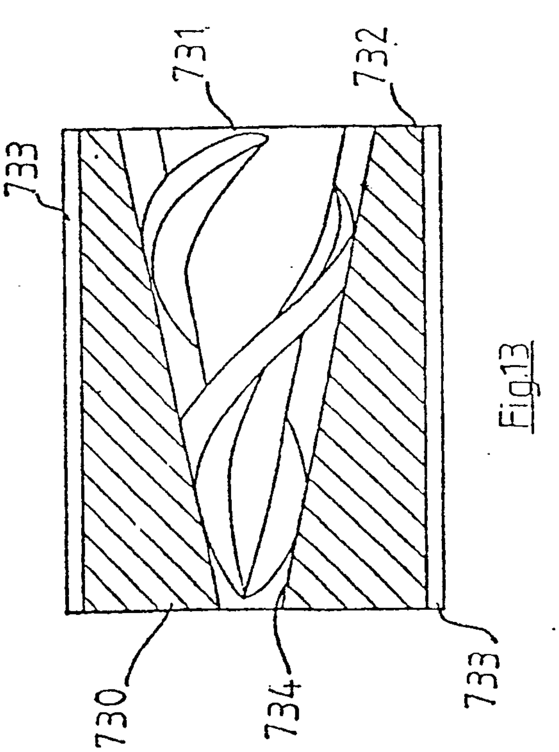


Fig.13

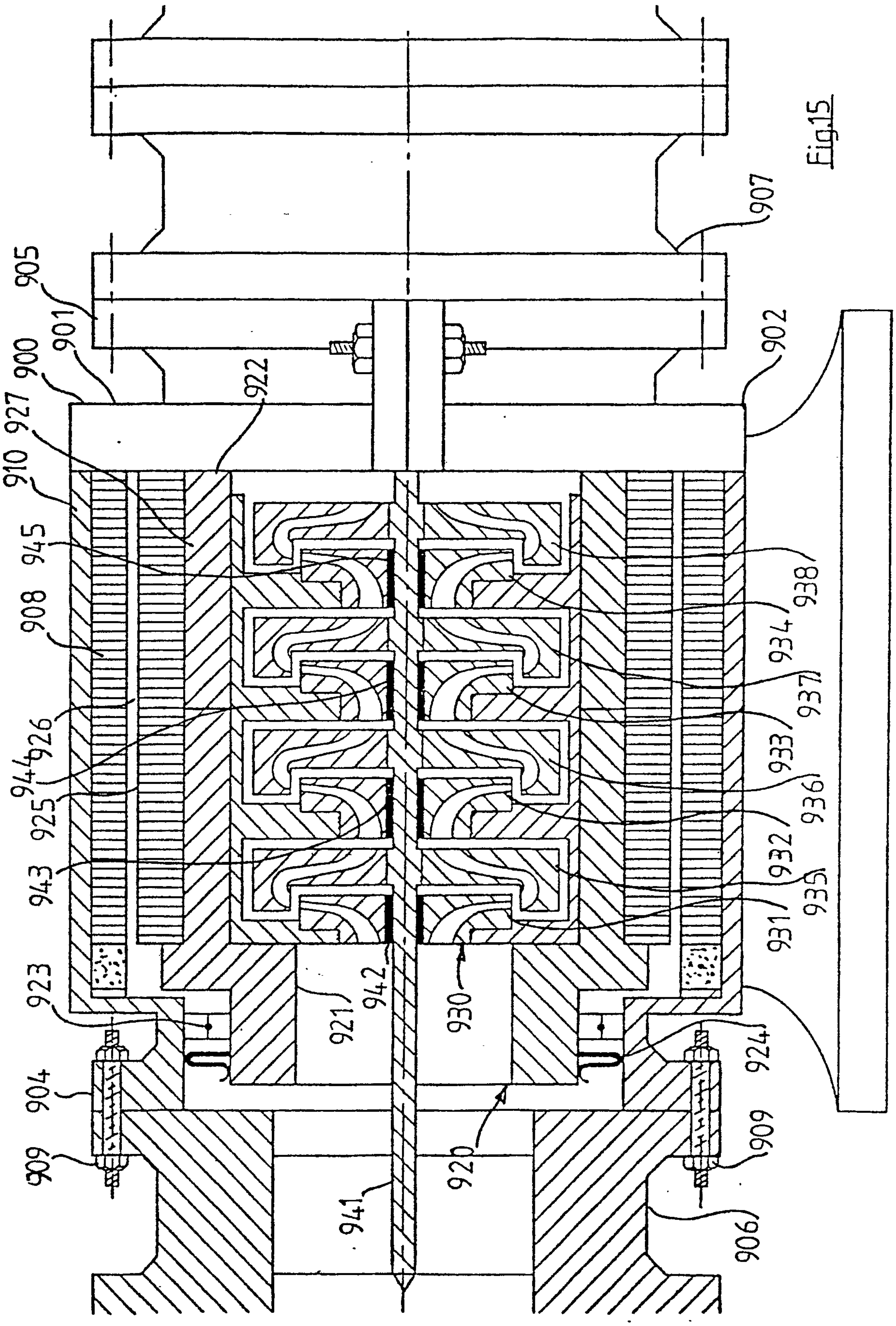
905
901
900
927
910
922
945
908
926
944
925
943
923
904
909
921
942
930
920
941
902
907
938
934
937
933
936
932
935
931
924
909
906

Fig.15

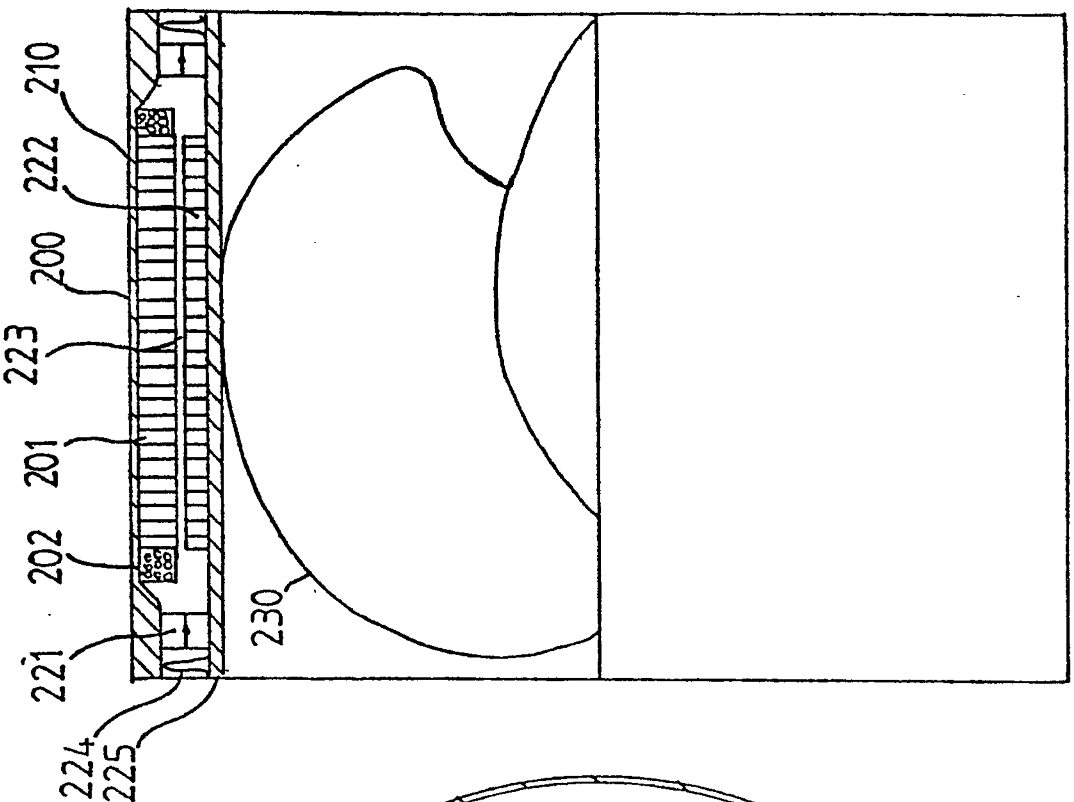
210
222
200
223
201
202
221
224
225
230

Fig.17

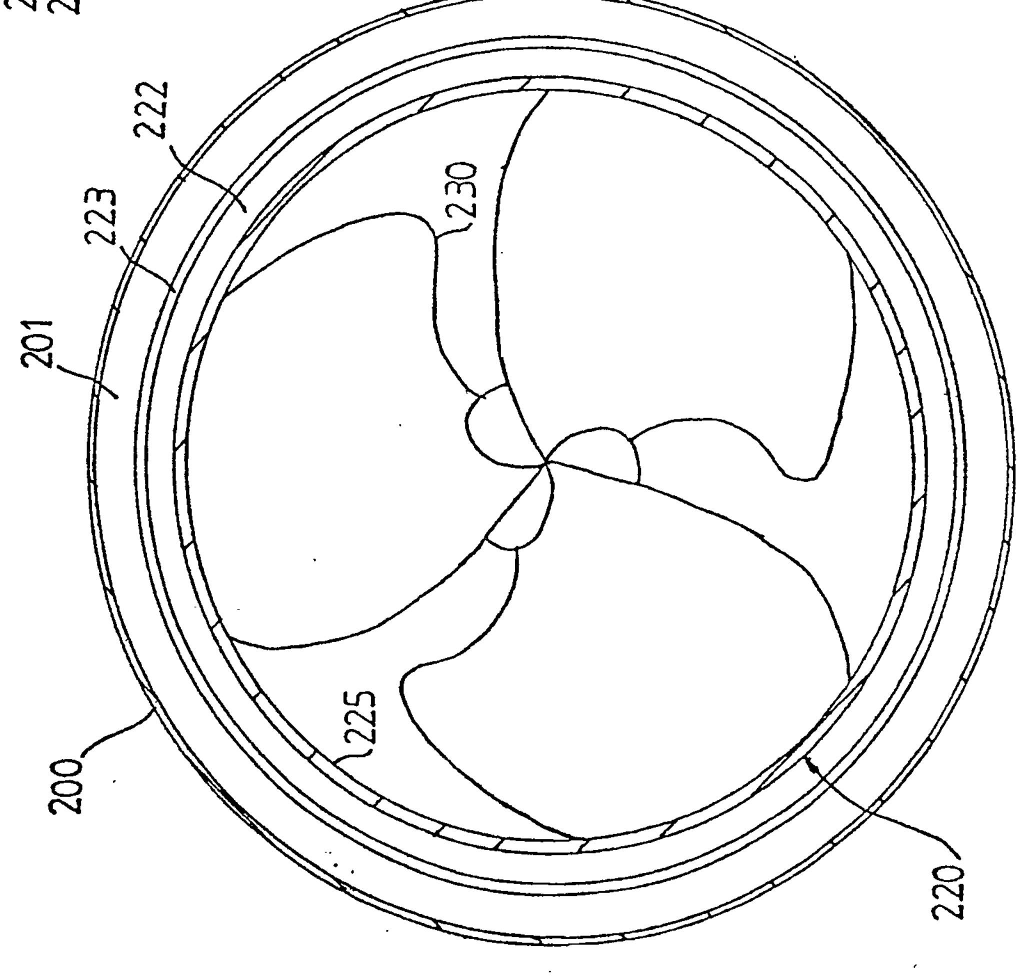
201
223
222
230
200
225
220

Fig.16

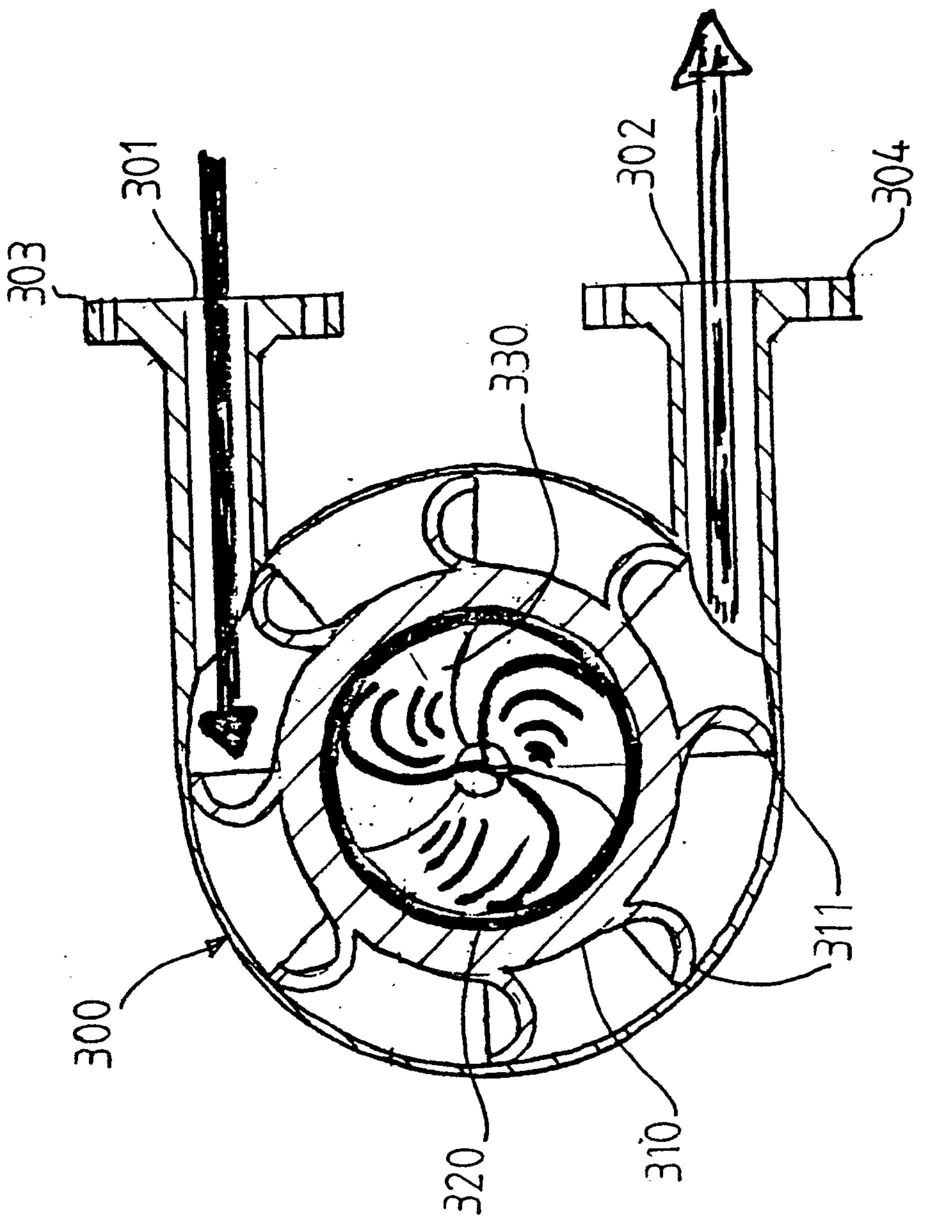


Fig.18

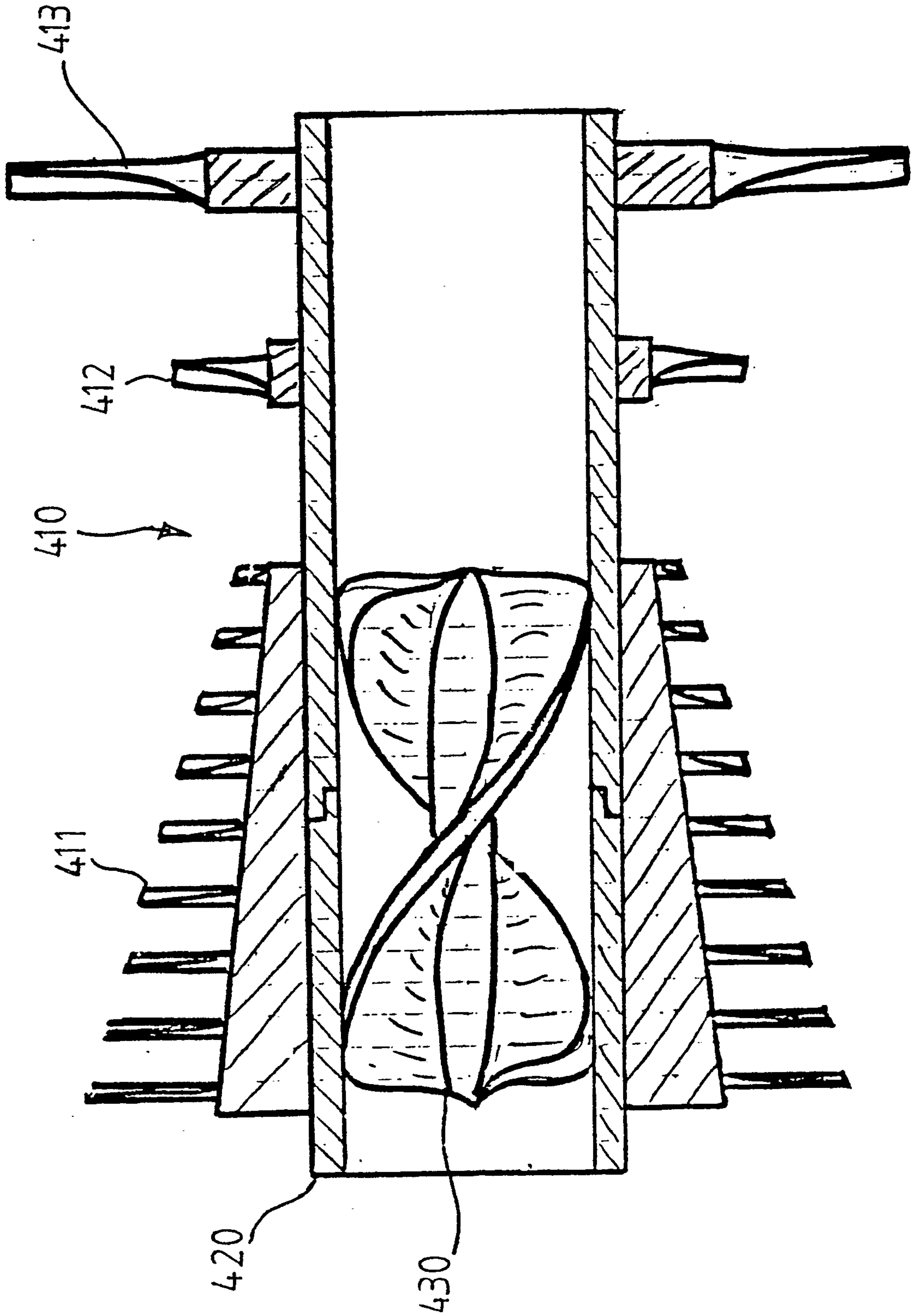


Fig.19